# EUROPEAN PATENT APPLICATION

(11) **EP 4 530 692 A1**
(43) Date of publication of application: **02.04.2025**
(21) Application number: 24201706.9
(22) Date of filing: 20.09.2024
(51) Int. Cl.: G02B 6/44

(54) **A STRAND MOUNTED TERMINAL FOR A FIBER OPTIC NETWORK AND METHOD OF MAKING SAME**

(30) Priority: 28.09.2023 US 202363540961 P
(71) Applicant: Corning Research & Development Corporation, Corning, New York 14831 (US)
(72) Inventor: GIRAUD, William Julius McPhil, Azle, 76020 (US); OZUNA, Andrea Marie, Fort Worth, 76134 (US); WILLIAMS, Anthony Lynn, Fort Worth, 76108 (US)
(74) Representative: Reddie & Grose LLP

(57) **Abstract**

A strand mounted terminal includes a terminal housing having a base portion and a cover portion and configured to receive fiber optic components for performing the various tasks required by the terminal. The base portion defines part of the interior of the terminal housing and includes some of the fiber optic components, such as an adapter housing, and the cover portion defines part of the interior of the terminal housing and also includes fiber optic components, such as a splitter housing. The cover portion is configured to be connected to the base portion and moveable between an opened position in which the interior of the terminal housing is accessible, and a closed position in which the interior of the terminal housing is inaccessible. A method of configuring a strand mounted terminal is also disclosed.

## Description

### Priority Application

This application claims the benefit of priority of U.S. Provisional Application No. 63/540,961, filed on September 28, 2023, the content of which is relied upon and incorporated herein by reference in its entirety.

### Technical Field

This disclosure relates generally to optical connectivity, and more particularly to a strand mounted terminal for a fiber optic network having improved component and fiber management within the terminal and a method of making a terminal having such improvements.

### Background

Optical fibers are useful in a wide variety of applications, including the telecommunications industry for voice, video, and data transmissions. The benefits of optical fiber are well known and include higher signal-to-noise ratios and increased bandwidth compared to conventional copper-based transmission technologies. To meet modern demands for increased bandwidth and improved performance, telecommunication networks are increasingly providing optical fiber connectivity closer to end subscribers. These initiatives include fiber-to-the-node (FTTN), fiber-to-the-premises (FTTP), fiber-to-the-home (FTTH), and the like (generally described as FTTx).

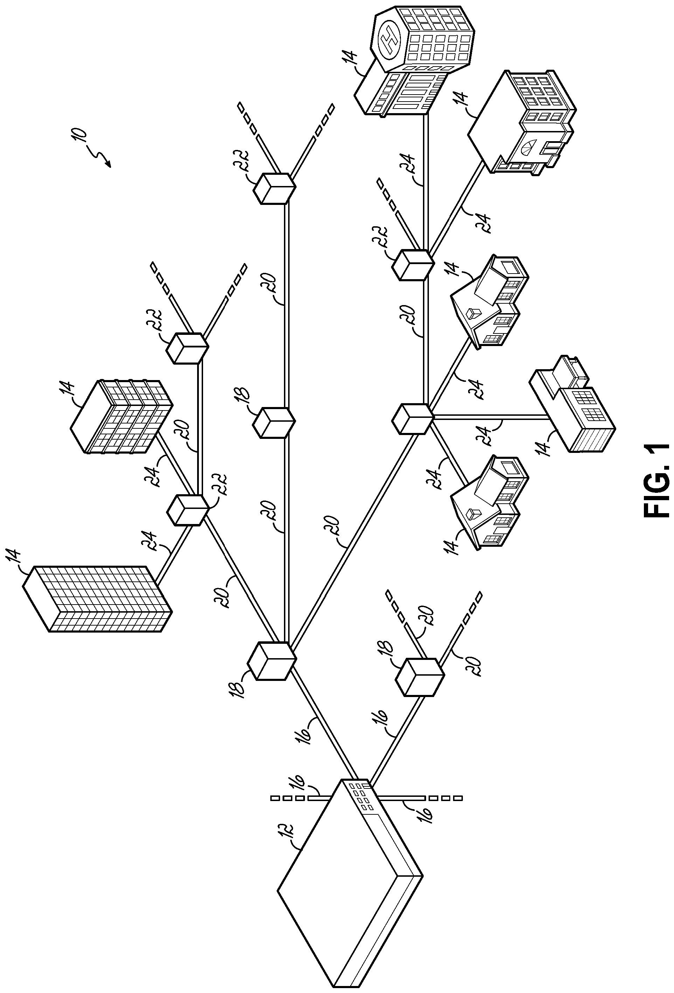

In an FTTx network, fiber optic cables are used to carry optical signals to various distribution points and, in some cases, all the way to end subscribers. For example, Fig. 1 is a schematic diagram of an exemplary FTTx network 10 that distributes optical signals generated at a switching point 12 (e.g., a central office of a network provider) to subscriber premises 14. Optical line terminals (OLTs; not shown) at the switching point 12 convert electrical signals to optical signals. Fiber optic feeder cables 16 then carry the optical signals to various local convergence points 18, which act as locations for splicing and making cross-connections and interconnections. The local convergence points 18 often include splitters to enable any given optical fiber in the fiber optic feeder cable 16 to serve multiple subscriber premises 14. As a result, the optical signals are "branched out" from the optical fibers of the fiber optic feeder cables 16 to optical fibers of distribution cables 20 that exit the local convergence points 18.

At network access points 22 closer to the subscriber premises 14, some or all of the optical fibers in the distribution cables 20 may be accessed to connect to one or more subscriber premises 14. Drop cables 24 extend from the network access points 22 to the subscriber premises 14, which may be single-dwelling units (SDU), multi-dwelling units (MDU), businesses, and/or other facilities or buildings. A conversion of optical signals back to electrical signals may occur at the network access points 22 or at the subscriber premises 14.

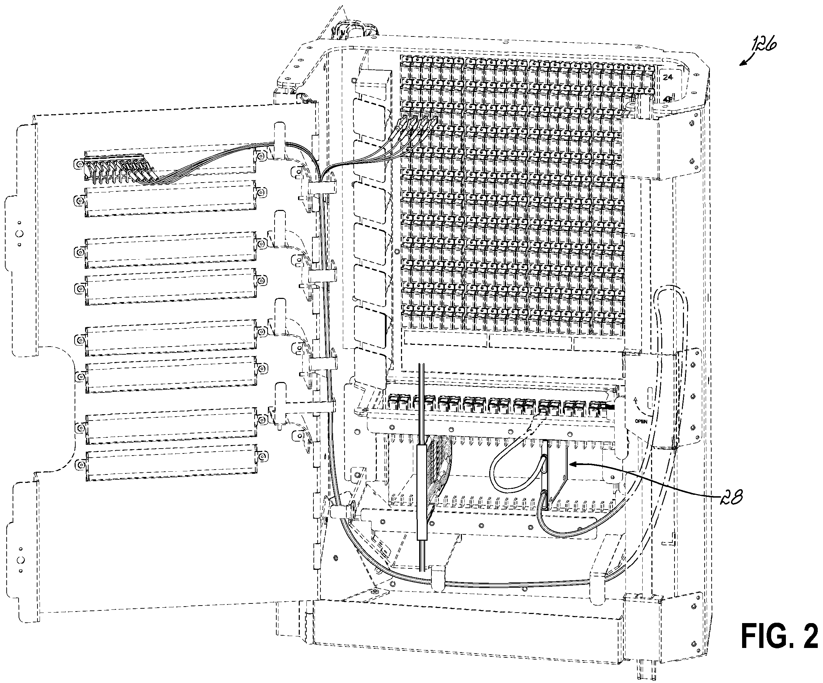

There are many different network architectures, and the various tasks required to distribute optical signals (e.g., splitting, splicing, routing, connecting subscribers) can occur at several locations. Regardless of whether a location is considered a local convergence point, network access point, subscriber premise, or something else, fiber optic equipment is used to house components that carry out one or more of the tasks. The term "terminal" will be used in this disclosure to generically refer to such equipment, which may include fiber distribution hubs (FDH), cabinets, closures, network interface devices, etc. Fig. 2 schematically illustrates an exemplary terminal 26 at, for example, a network access point 22 of the fiber optic network 10. In many current network architectures, terminals at network access points 22 are configured to split the signal in each of the optical fibers carried in the distribution cables 20. The optical fibers of the distribution cables 20 are routed to one or more splitter modules 28 (one shown) carried in the terminal 26 where the optical signal in the optical fibers is split between a plurality of output fibers. By way of example, the splitter module 28 may be configured to split the incoming optical signal between 2 and 32 times. The output fibers of the splitter module 28 are then coupled to a dedicated drop cable 24 extending from the terminal 26 for distribution to subscriber premises 14. The optical signal carried by any one of the drop cables 24 is a split version of the optical signal carried by an optical fiber of the distribution cable 20.

Many terminals at network access points 22 are configured as ground based, pad mounted terminals, such as, for example, curbside terminals adjacent to homes, office buildings, etc. The installation of pad mounted terminals is expensive, time consuming, and typically subject to government regulations. By way of example, pad mounted terminals often require government permits before installation can begin. The permit process can be expensive and subject to significant delays. These issues have led fiber optic network manufacturers to provide pole mounted terminals at network access points 22. Such pole mounted terminals, however, are also subject to governmental regulations and approval processes. Pole-based network architectures (e.g., electric, phone, cable) often include support strands extending between the poles in the utility network to support the poles as well as some of the utility lines extending between the poles. The support strands are typically tensioned cables (e.g., twisted metal filaments) extending between the poles. Recently, fiber optic network manufacturers have developed terminals that attach to the strands extending between the poles of the utility network. The attachment of network components to the strands is subject to significantly less government regulation, and thus presents fiber optic network manufacturers a lower cost option for forming optical connections between distribution cables 20 and drop cables 22 of the fiber optic network 10.

While such strand mounted terminals provide some benefits, there remain several drawbacks to current designs. For example, to maintain the terminal as compact as possible, the terminals are packed full of components, such as splitters, adapters, connectors, connector parking devices, etc., that do not leave much room for excess fiber optic cable length. Thus, when a terminal provides connections for numerous end subscribers, it is common for such terminals to devolve into a highly unorganized and chaotic array of optical fibers that twist, turn and crisscross to form a heap of optical fibers running in multiple directions. Technicians, for example, when connecting or adding new subscribers at the terminal do so very quickly and often without due care to maintain the terminal in an organized state. Consequently, troubleshooting the terminal becomes nearly impossible. Additionally, due to the compact arrangement, when the terminal is closed, the heap of excess optical fibers often presses against the fiber optic connectors and may dislodge, loosen, or otherwise interrupt optical connections made in the terminal, which requires a return visit by the technician to restore a high-quality optical signal. Accordingly, further improvements in network access point terminals are desired by fiber optic network manufacturers and installers.

### Summary

In one aspect of the disclosure, a strand mounted terminal for a fiber optic network is disclosed. The fiber optic network includes an incoming fiber optic cable carrying incoming optical fibers and an outgoing fiber optic cable carrying outgoing optical fibers, and the incoming optical fibers may be optically connected to the outgoing optical fibers at the terminal. The terminal includes a terminal housing configured to receive respective end sections of the incoming fiber optic cable and the outgoing fiber optic cable and defines an interior for receiving fiber optic components for performing the various tasks required by the terminal. The terminal housing includes a base portion and a cover portion. The base portion defines part of the interior of the terminal housing and includes some of the fiber optic components therein. The base portion is configured to be connected to the strand of the fiber optic network. The cover portion defines part of the interior of the terminal housing and also includes some of the fiber optic components therein. The cover portion is configured to be connected to the base portion and moveable between an opened position in which the interior of the terminal housing is accessible, and a closed position in which the interior of the terminal housing is inaccessible.

In one embodiment, the cover portion of the terminal housing may be hingedly connected to the base portion of the terminal housing and rotatable between the opened position and the closed position. Additionally, one of the base portion of the terminal housing or the cover portion of the terminal housing may include at least one latch for releasably securing the cover portion in the closed position. Furthermore, the terminal housing may include a limit mechanism to restrict the movement of the cover portion of the terminal housing relative to the base portion of the terminal housing in the opened position. For example, a lanyard may be provided to limit the movement of the cover portion in the opened position. In one embodiment, when the terminal is mounted to the strand, the cover portion of the terminal housing may be configured to open in a vertically downward direction and close in a vertically upward direction relative to the base portion of the terminal housing.

In one embodiment, the fiber optic components contained in the terminal may include an adapter housing having a plurality of adapters, each defining at least one front port and at least one rear port, and a splitter housing including at least one splitter module. In this embodiment, for example, the adapter housing may be connected to and substantially contained in the base portion of the terminal housing, and the splitter housing may be connected to and substantially contained in the cover portion of the terminal housing. By positioning the fiber optic components of the terminal in both the base portion and the cover portion of the terminal housing, space management of the components may be improved and access to and working with those components may also be improved.

In one embodiment, the adapter housing may include a main panel and a front panel connected to the main panel. The main panel may include a front side and a rear side and the main panel may be configured to carry the plurality of adapters such that the front ports of the plurality of adapters are accessible from the front side of the main panel and the rear ports of the plurality of adapters are accessible from the rear side of the main panel. The front panel may be moveable relative to the main panel between an opened position in which the front side of the main panel including the front ports of the plurality of adapters is accessible, and a closed position in which the front side of the main panel including the front ports of the plurality of adapters is inaccessible. For example, the front panel may be hingedly connected to the main panel of the adapter housing and rotatable between the opened position and the closed position.

In one embodiment, one of the front panel or the main panel of the adapter housing may include at least one latch for releasably securing the front panel in the closed position. Additionally, one of the front panel or the main panel may include a locking mechanism for releasably securing the front panel in the opened position.

In one embodiment, when the front panel is in the closed position, the front panel may generally overlie the front ports of the plurality of adapters to shield the front ports from contact by other fiber optic components in the terminal. Additionally, when the terminal is mounted to the strand and the cover portion of the terminal housing is in the opened position, the front panel may be configured to open in a vertically upward direction and close in a vertically downward direction relative to the main panel of the adapter housing.

In one embodiment, the adapter housing may further include a rear panel connected to the main panel and moveable between an opened position in which the rear side of the main panel including the rear ports of the plurality of adapters is accessible, and a closed position in which the rear side of the main panel including the rear ports of the plurality of adapters is inaccessible. For example, the rear panel may be hingedly connected to the main panel of the adapter housing and rotatable between the opened position and the closed position. One of the rear panel or the main panel of the adapter housing may include a locking mechanism for releasably securing the rear panel in the closed position. When the rear panel is in the closed position, the rear panel may generally overlie the rear ports of the plurality of adapters to shield the rear ports from contact by other fiber optic components in the terminal.

In one embodiment, the terminal may further include at least one fanout housing attached to the adapter housing and operatively connected to the incoming fiber optic cable and the outgoing fiber optic cable and a plurality of cable pigtails extending from the fanout housing. Each of the plurality of cable pigtails may be spliced to at least one of the incoming optical fibers of the incoming fiber optic cable or to at least one of the outgoing optical fibers of the outgoing fiber optic cable. In one embodiment, an end section of each of the plurality of cable pigtails may include a fiber optic connector and the fiber optic connectors may be received in a rear port of a respective one of the plurality of adapters in the adapter housing.

In one embodiment, the plurality of cable pigtails may include a first group operatively connected to the incoming fiber optic cable, a first group of the plurality of adapters in the adapter housing may define a feeder field, and the fiber optic connectors of the first group of the plurality of cable pigtails may be received in a rear port of a respective one of the plurality of adapters that defines the feeder field. Moreover, in one embodiment, the plurality of cable pigtails may include a second group operatively connected to the outgoing fiber optic cable, a second group of the plurality of adapters in the adapter housing may define a distribution field, and the fiber optic connectors of the second group of the plurality of cable pigtails may be received in a rear port of a respective one of the plurality of adapters that defines the distribution field.

In one embodiment, the at least one splitter module may include a plurality of module pigtails extending from the at least one splitter module and an end section of each of the module pigtails may include a fiber optic connector. The fiber optic connectors may be received in a front port of a respective one of the plurality of adapters in the adapter housing. In a similar manner to the above, the fiber optic connector of at least one of the plurality of module pigtails may be received in the front port of a respective one of the first group of plurality of adapters that defines the feeder field. Moreover, the fiber optic connector of some of the plurality of module pigtails may be received in the front port of a respective one of the second group of plurality of adapters that define the distribution field.

In one embodiment, the splitter housing may include a plurality of splitter modules and each splitter module may have its corresponding module pigtails connected to the front ports of the plurality of adapters similar to that described above.

In one embodiment, the terminal may include a parking device having a plurality of parking ports and each of the plurality of parking ports may be configured to receive the fiber optic connector of the plurality of module pigtails. More particularly, the parking device may be configured to receive the fiber optic connector of unused module pigtails and store those fiber optic connectors in the parking device until the module pigtails are to be used. In one embodiment, the parking device may be connected to the adapter housing such that the parking ports are adjacent to the plurality of adapters carried by the main panel of the adapter housing.

In one embodiment, each of the base portion of the terminal housing and the cover portion of the terminal housing may include one or more fiber management devices. The fiber management devices help manage the optical fibers associated with the plurality of cable pigtails and the plurality of module pigtails and aid their routing to their desired destinations.

In another aspect of the disclosure, a method of configuring a strand mounted terminal for a fiber optic network is disclosed. The method includes receiving respective end sections of the incoming fiber optic cable and the outgoing fiber optic cable in the interior of the terminal housing and splicing each of the incoming optical fibers and the outgoing optical fibers to a respective one of a plurality of cable pigtails, where each of the plurality of cable pigtails includes a fiber optic connector. An adapter housing having a plurality of adapters may be provided and each of the plurality of adapters may include at least one front port and at least one rear port. The method further includes inserting the fiber optic connectors from the plurality of cable pigtails into a rear port of a respective one of the plurality of adapters in the adapter housing. The adapter housing may be connected to the base portion of the terminal housing. According to the method, a splitter housing having at least one splitter module may be provided. The at least one splitter module includes a plurality of module pigtails extending from the at least one splitter module and each of the plurality of module pigtails includes a fiber optic connector. The splitter housing may be connected to the cover portion of the terminal housing. The method further includes inserting the fiber optic connectors from some of the plurality of module pigtails into a front port of a respective one of the plurality of adapters in the adapter housing.

In one embodiment, splicing each of the incoming optical fibers and the outgoing optical fibers to the respective one of a plurality of cable pigtails may include splicing each of the incoming optical fibers and the outgoing optical fibers to the respective one of a plurality of cable pigtails at a fanout housing and connecting the fanout housing to the adapter housing.

In one embodiment, a first group of the plurality of adapters may define a feeder field and a second group of the plurality of adapters may define a distribution field. In this embodiment, inserting the fiber optic connectors from the plurality of cable pigtails into the rear ports of the plurality of adapters in the adapter housing may further include: i) inserting the fiber optic connector from the plurality of cable pigtails spliced to incoming optical fibers of the incoming fiber optic cable into the rear port of a respective one of the plurality of adapters in the feeder field; and ii) inserting the fiber optic connector from the plurality of cable pigtails spliced to outgoing optical fibers of the outgoing fiber optic cable into the rear port of a respective one of the plurality of adapters in the distribution field.

In one embodiment, inserting the fiber optic connectors from some of the plurality of module pigtails into the front ports of the plurality of adapters in the adapter housing may further include: iii) inserting the fiber optic connector from at least one of the plurality of module pigtails into the front port of a respective one of the plurality of adapters in the feeder field; and iv) inserting the fiber optic connector from some of the plurality of module pigtails into the front port of a respective one of the plurality of adapters in the distribution field.

In one embodiment, the method may further include providing a parking device in the terminal housing, the parking device including a plurality of parking ports, and inserting the fiber optic connector from some of the plurality of module pigtails into a respective one of the plurality of parking ports of the parking device.

In one embodiment, the method may further include shielding the fiber optic connectors received in the front ports of the plurality of adapters in the adapter housing from fiber optic components in the terminal. This may be achieved in one embodiment by providing the adapter housing with a first panel moveable between an opened position and a closed position, where in the closed position, the first panel may overlie the front ports of the plurality of adapters to shield the front ports from fiber optic components in the terminal. In one embodiment, the method may further include shielding the fiber optic connectors received in the rear ports of the plurality of adapters in the adapter housing from fiber optic components in the terminal. This may be achieved in one embodiment by providing the adapter housing with a second panel moveable between an opened position and a closed position, where in the closed position, the second panel may overlie the rear ports of the plurality of adapters to shield the rear ports from fiber optic components in the terminal.

In another aspect of the disclosure, a method of servicing the strand mounted terminal described above in the first aspect is disclosed. The method includes moving the cover portion of the terminal housing from the closed position to the opened position to expose the interior of the terminal housing, moving the front panel of the adapter housing from the closed position to the opened position to expose the front ports of the plurality of adapters in the adapter housing, performing service on the terminal with the front panel in the opened position, moving the front panel from the opened position to the closed position, and moving the cover portion of the terminal housing from the opened position to the closed position.

In one embodiment, performing service on the terminal may include removing the fiber optic connector of at least one module pigtail connected to the parking device and inserting the fiber optic connector of the at least one module pigtail into the front port of a respective one of the plurality of adapters in the distribution field. In another embodiment, performing service on the terminal may include removing the fiber optic connector of at least one module pigtail connected to the front port of a respective one of the plurality of adapters in the distribution field, and inserting the fiber optic connector of the at least one module pigtail into a respective one of the plurality of parking ports of the parking device.

Additional features and advantages will be set forth in the detailed description which follows, and in part will be readily apparent to those skilled in the technical field of optical connectivity. It is to be understood that the foregoing general description, the following detailed description, and the accompanying drawings are merely exemplary and intended to provide an overview or framework to understand the nature and character of the claims.

### Brief Description of the Drawings

The accompanying drawings are included to provide a further understanding and are incorporated in and constitute a part of this specification. The drawings illustrate one or more embodiment(s), and together with the description serve to explain principles and operation of the various embodiments. Features and attributes associated with any of the embodiments shown or described may be applied to other embodiments shown, described, or appreciated based on this disclosure.
Fig. 1 is a schematic diagram of an exemplary FTTx network.
Fig. 2 is a perspective view of one embodiment of a pad mounted terminal.
Fig. 3 is a perspective view of a strand mounted terminal in accordance with an embodiment of the disclosure illustrated in a closed position.
Fig. 4 is a top view of the strand mounted terminal shown in of Fig. 3.
Fig. 5 is a perspective view of the strand mounted terminal shown in Fig. 3 illustrated in an opened position, with an adapter housing of the terminal attached to a base portion of a terminal housing.
Fig. 6 is a front view of the strand mounted terminal shown in Fig. 5.
Fig. 7 is a perspective view of the strand mounted terminal shown in Fig. 5 illustrated with a front panel of the adapter housing in an opened position.
Fig. 8 is a front view of the strand mounted terminal shown in Fig. 7.
Fig. 9 is a perspective view of the strand mounted terminal shown in Fig. 5, but with the adapter housing not substantially arranged in the base portion of the terminal housing so that a rear panel of the adapter housing is shown, wherein the rear panel is in a closed position.
Fig. 10 is a perspective view similar to Fig. 9, but with the rear panel of the adapter housing in an opened position.

### Detailed Description

Various embodiments will be further clarified by examples in the description below. In general, the description generally relates to a strand mounted terminal of a fiber optic network that has improved space and cable management within the terminal to address the overcrowded and chaotic state of many current terminals. Most terminals include a base that is configured to hold the fiber optic components of the terminal and some type of cover that allows selective access to the interior of the terminal. In this way, technicians or personnel may service the terminal to, for example, add customer service, remove customer service, expand the capacity of the terminal, and/or provide maintenance to components in the terminal. Typically, the cover to the terminal performs no function other than providing access to the interior of the terminal. Aspects of the present disclosure provide improved space management by utilizing the cover of the terminal to hold some of the fiber optic components of the terminal. In this way, all of the components do not have to be positioned in the base of the terminal and allows the components to be spread out within the interior of the terminal.

By way of example, and as will be discussed below, the terminal may be a network access point 22 for the fiber optic network 10 and include an adapter housing that provides a plurality of adapters for making optical connections between an incoming fiber optic cable (e.g., a distribution cable 20) and an outgoing fiber optic cable (e.g., a drop cable 24) and a splitter housing having at least one splitter module (for splitting the incoming optical signals). The adapter housing may be connected to and generally positioned in the base of the terminal and the splice housing may be connected to and generally positioned in the cover of the terminal. Thus, when a technician opens the terminal, these components are spread out in a manner that makes servicing the terminal easier and less prone to error.

In this regard, convention terminals may become so overcrowded that the optical signals between the incoming fiber optic cable and the outgoing fiber optic cable may be diminished or interrupted when the terminal is closed up and fiber optic components in the terminal press against the fiber optic connectors inserted into the ports of the plurality of adapters in the adapter housing. In another aspect of the disclosure, to prevent such diminished or interrupted optical signals, the adapter housing includes a multi-paneled construction. A main panel of the adapter housing includes the plurality of adapters and their respective front and rear ports. A front panel may be connected to the main panel and is moveable between an opened position and a closed position. In the opened position, a technician may easily access the front ports of the adapters. In the closed position, the front panel generally overlies the front ports of the adapters and shields the front ports (and the fiber optic connectors received therein) from contact with other fiber optic components in the terminal. In a similar manner, a rear panel may be connected to the main panel and moveable between an opened position and a closed position. In the opened position, a technician may easily access the rear ports of the adapters. In the closed position, the rear panel generally overlies the rear ports of the adapters and shields the rear ports (and the fiber optic connectors received therein) from contact with other fiber optic components in the terminal.

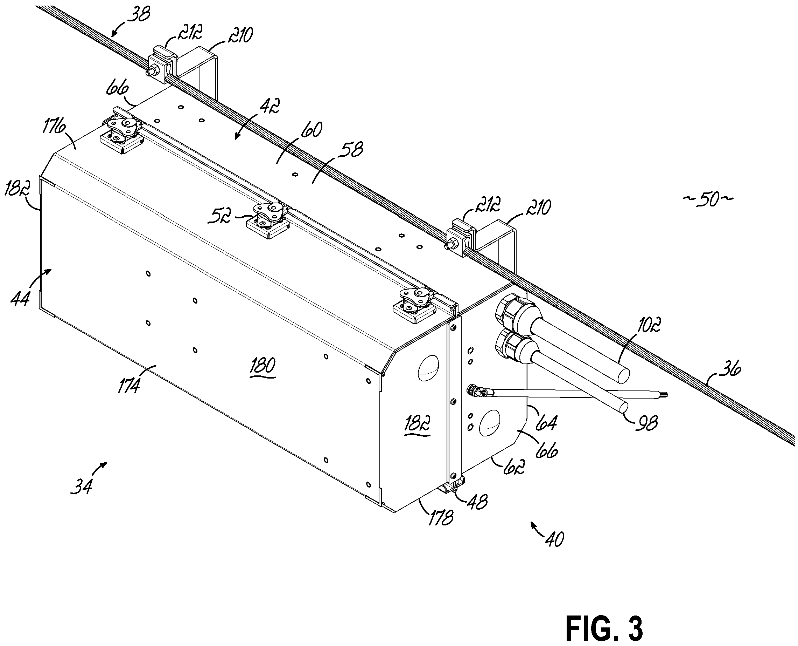

With this in mind, Fig. 3 illustrates an exemplary embodiment of a terminal 34 located at, for example, a network access point 22 of a fiber optic network 10. In an exemplary embodiment, the terminal 34 is configured to be connected to a strand 36 of a pole-based utility network 38. The terminal 34 includes a terminal housing 40 that supports various components for accomplishing the network tasks associated with the network access point 22. The terminal housing 40 includes a base portion 42 and a cover portion 44 that collectively define the terminal housing 40 having an interior 46 for holding the network components. The base portion 42 is the portion of the terminal housing 40 configured to be connected to the strand 36 and the cover portion 44 is the portion of the terminal housing 40 configured to move relative to the base portion 42 to access the interior 46 of the terminal housing 40. More particularly, in one embodiment, the cover portion 44 of the terminal housing 40 may be attached to the base portion 42 of the terminal housing 40 at a hinge 48 and moveable between a closed position, where the interior 46 of the terminal housing 40 is inaccessible from the external environment 50, and an opened position, where the interior 46 of the terminal housing 40 is accessible from the external environment 50.

For example, in the closed position, the interior 46 of the terminal housing 40 may be protected from rain, ice, animals, and other debris that may negatively impact the various components therein. In the opened position, technicians or other personnel (generally referred to herein as "technicians" or "technician") may access the various components therein to start service, cease service, perform maintenance, or perform other activities associated with the fiber optic network 10. In this regard, the terminal housing 40 may include one or more releasable latches 52 that maintain the cover portion 44 in the closed position. The figures illustrate three latches 52 but the number may be more or less than this amount. The latches 52 may be actuated by the technician to release the latches 52 an allow the cover portion 44 to move from the closed position to the opened position and thereby allow the technician to gain access to the various components in the interior 46 of the terminal housing 40. In one embodiment, the latches 52 may be configured to be on the base portion 42 and engage with a part of the cover portion 44. In an alternative embodiment, the latches may be configured to be on the cover portion 44 and engage with a part of the base portion 43.

In accordance with an aspect of the disclosure, unlike many conventional fiber optic terminals, terminal 34 includes fiber optic components in both the base portion 42 of the terminal housing 40 and the cover portion 44 of the terminal housing 40. As discussed above, in many conventional approaches, nearly all of the fiber optic components of the terminal are placed in the base portion of the terminal and the cover portion is used only for covering or closing off the base portion. As a consequence, the base portion is often packed very tightly with fiber optic components and space for excess fiber optic cables is severely restricted, leading to the "spaghetti" heap of optical fibers in the terminal. The terminal 34 of the present disclosure takes a different approach in that both the base portion 42 and the cover portion 44 of the terminal housing 40 contain fiber optic components. In other words, the cover portion 44 is used for more than closing off the base portion 42 of the terminal housing 40. This transfer of some of the fiber optic components from the base portion 42 to the cover portion 44 provides improved space utilization and improved cable management within the interior 46 of the terminal housing 40. This, in turn, minimizes the risk that the fiber optic cabling within the interior 46 of the terminal housing 40 will interfere with providing good optical connections and optical signal transitions within the terminal housing 40 due to excessive compactness. By way of example, and as discussed in more detail below, in an exemplary embodiment the base portion 42 of the terminal housing 40 may be configured to include an adapter bank that defines the feeder field and the distribution field of the terminal 34, and the cover portion 44 of the terminal housing 40 may be configured to include at least one splitter module of the terminal 34. In alterative embodiments, the components of the terminal 34 may be divided among the base portion 42 and the cover portion 44 in a different manner.

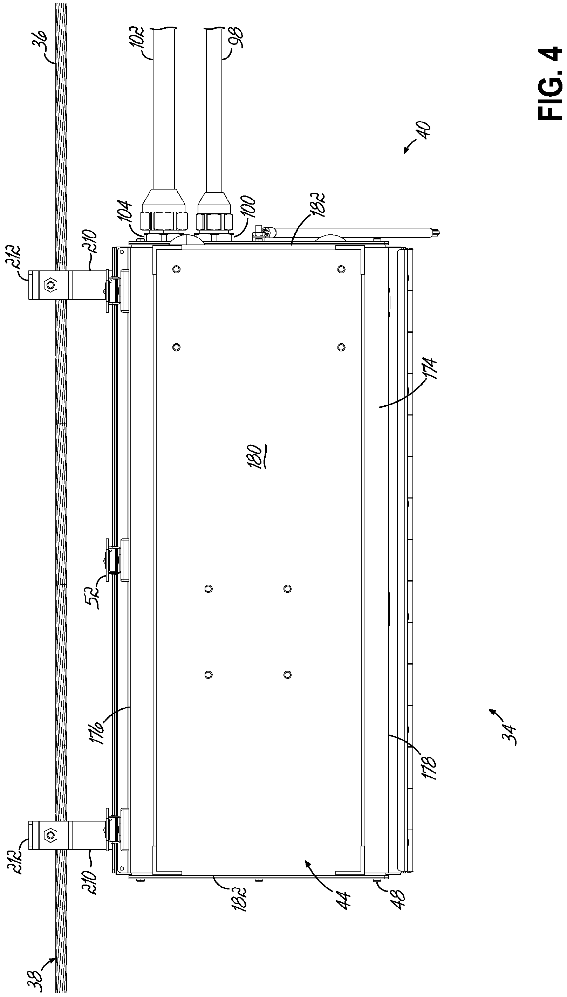

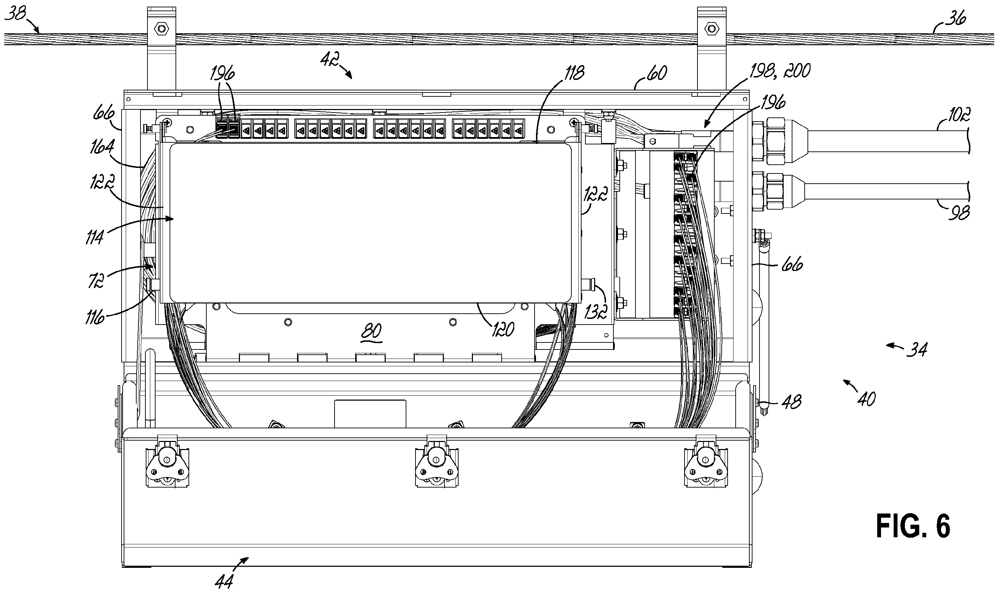

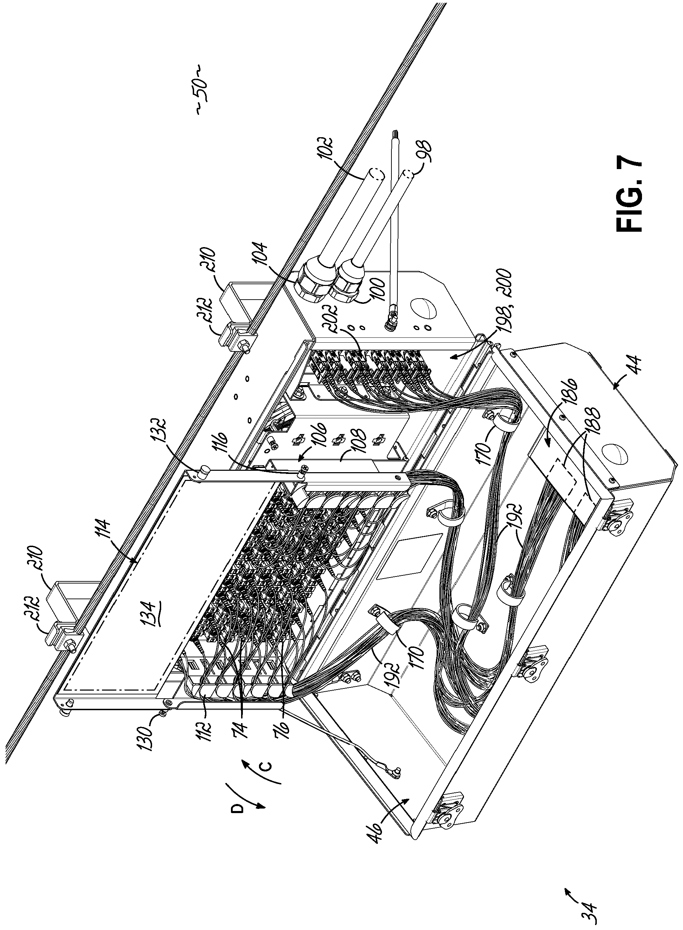

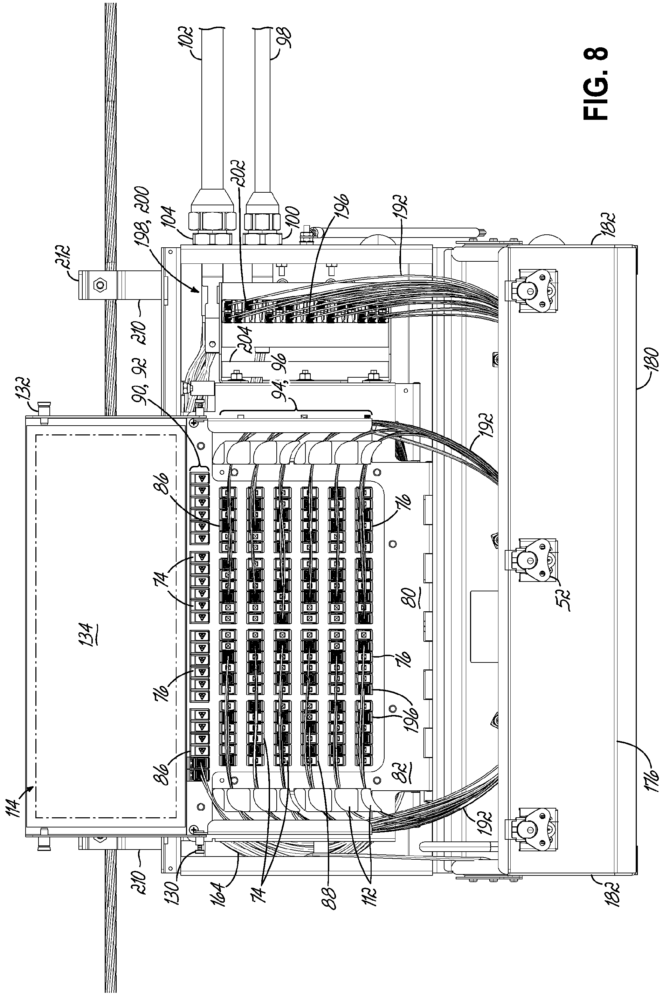

Turning to Figs. 3-10, the base portion 42 includes a generally rectangular body 58 having a top wall 60, a bottom wall 62 opposite the top wall 60, a rear wall 64 extending between the top wall 60 and the bottom wall 62, and a pair of side walls 66 also extending between the top wall 60 and the bottom wall 62 to define part of the interior 46 of the terminal housing 40. The base portion 42 lacks a wall at its front side, as that side of the base portion 42 is configured to be closed off by the cover portion 44 of the terminal housing 40. It should be understood that the terms "top, "bottom", "rear", "front", and "side" are used to facilitate a description of embodiments of the disclosure and are not intended to limit the terminal 34 to a particular arrangement or orientation. As illustrated in the figures, the top wall 60 of the base portion 42 may be configured to include the latches 52 that cooperate with the cover portion 44 to maintain the cover portion 44 in the closed position. For example, the latches 52 may be positioned adjacent an inner edge 68 of the top wall 60 for selectively engaging with a part of the cover portion 44. Moreover, the inner edge 70 of the bottom wall 62 may be configured to be connected to the cover portion 44 via the hinge 48. Accordingly, in an exemplary embodiment, the cover portion 44 is configured to open in a downwardly direction, as illustrated by arrow A, to provide access to the interior 46 of the terminal housing 40 and configured to close in an upwardly direction, as illustrated by arrow B, to close off access to the interior 46 of the terminal housing 40.

As noted above, in an exemplary embodiment, the base portion 42 of the terminal housing 40 includes an adapter housing 72 that may be fixedly attached to the base portion 42, such as at one or more of the walls 60, 62, 64, 66 thereof. For example, in one embodiment, the adapter housing 72 may be fixed to the base portion 42 with one or more fasteners, such as screws, bolts, rivets, clips, etc. The adapter housing 72 includes a plurality of adapters 74 defining a plurality of front ports 76 and a plurality of rear ports 78 for receiving fiber optic connectors and making optical connections between the fiber optic connectors on opposed sides of the adapters 74. As will be explained in more detail below, in one embodiment, the adapter housing 72 may include a tri-panel design that facilitates assembly of the terminal 34 during, for example, initial installation, and facilitates service calls by technicians to connect service, disconnect service, perform maintenance, etc. at the terminal 34.

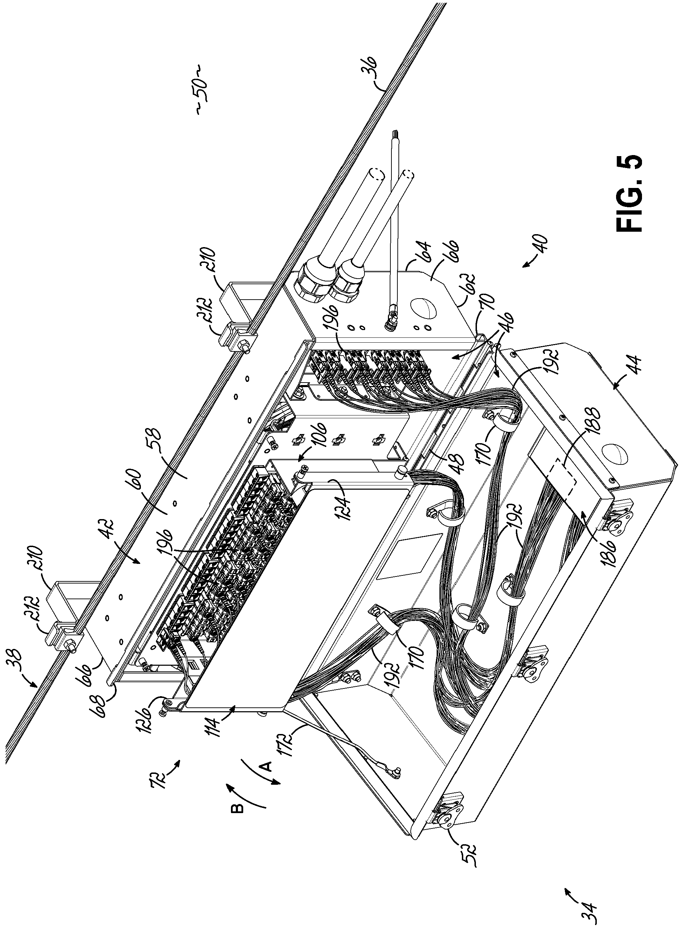

In this regard and as illustrated in Figs. 5-8, the adapter housing 72 includes a main panel 80 defining a front side 82 and a rear side 84. The main panel 80 includes a plurality of openings 86, where each of the openings 86 is configured to receive one or more adapters 74 therein. For example, in one embodiment, each adapter 74 may include an adapter body 88 received within a respective opening 86 in the main panel 80 having a single front port 76 and rear port 78. Alternatively, each adapter 74 may include an adapter body 88 received within a respective opening 86 in the main panel 80 having a plurality of front ports 76 and rear ports 78 (e.g., a ganged adapter). For example, the embodiment illustrated in the figures provides a ganged-type of adapter 74 having an adapter body 88 having six front ports 76 and rear ports 78. However, the main panel 80 may be configured to receive a wide range of adapter configurations and should not be limited to those shown in the figures. In an exemplary embodiment, the plurality of adapters 74 may be arranged in an array having multiple rows and columns of adapters 74.

As will be explained in more detail below, a first group 90 of the plurality of adapters 74 in the main panel 80 defines a feeder field 92 and a second group 94 of the plurality of adapters 74 defines a distribution field 96. The feeder field 92 may be associated with an incoming fiber optic cable 98 to the terminal 34 and one or more optical fibers carried thereby such as by subunits of the incoming fiber optic cable 98. The incoming fiber optic cable 98 is configured to carry the incoming fiber optic signal to the terminal 34. By way of example, and without limitation, the incoming fiber optic cable 98 to the terminal 34 may be one or more distribution cables 20 of the fiber optic network 10 shown in Fig. 1 (e.g., the terminal 34 defines a network access point 22 of the fiber optic network 10.). In this regard, the base portion 42 of the terminal housing 40 may include a cable inlet 100 in, for example, one of the side walls 66 for receiving the incoming fiber optic cable 98 and the optical fibers carried thereby. It should be recognized that in alternative embodiments, the cable inlet 100 may be in one of the other walls of the base portion 42. Moreover, in an exemplary embodiment, the cable inlet 100 may be generally adjacent the intersection of the top wall 60 and the rear wall 64 of the base portion 42. This allows the optical fibers of the incoming fiber optic cable 98 to be more easily directed to their desired locations within the interior 46 of the terminal housing 40. Other locations for the cable inlet 100 are also possible and remain within the scope of the present disclosure. The cable inlet 100 may include a strain-relief device to prevent excessive tensioning of the optical fibers of the incoming fiber optic cable 100.

In one embodiment, the first group 90 of the plurality of adapters 74 that defines the feeder field 92 may be configured as a selected row in the array of adapters 74 provided by the main panel 80 of the adapter housing 72. For example, in an exemplary embodiment, the feeder field 92 may be defined by the topmost row of adapters 74 in the array of the plurality of adapters 74 in the main panel 80. It should be appreciated, however, that this location of the feeder field 92 is merely exemplary and that the feeder field 92 may be defined by a different group of the plurality of adapters 74. For example, in an alternative embodiment, the feeder field 92 may be defined by a lowermost row of adapters 74 in the array of the plurality of adapters 74 or a middle row of adapters 74 in the array of the plurality of adapters 74. In a further alternative embodiment, the feeder field 92 may be defined by a leftmost, rightmost, or middle column of adapters 74 in the array of the plurality of adapters 74. Thus, aspects of the disclosure should not be limited to a particular group of the plurality of adapters 74 to define the feeder field 92.

The distribution field 96 may be associated with an outgoing fiber optic cable 102 from the terminal 34 and one or more optical fibers carried thereby. The outgoing fiber optic cable 102 is configured to carry the outgoing fiber optic signal from the terminal 34. By way of example, and without limitation, the outgoing fiber optic cable 102 from the terminal 34 may be one or more drop cables 22 of the fiber optic network 10 shown in Fig. 1. In this regard, the base portion 42 of the terminal housing 40 may include a cable outlet 104 in, for example, one of the side walls 66 for receiving the outgoing fiber optic cable 102 and the optical fibers carried by that cable. For example, in an exemplary embodiment, the cable outlet 104 may be adjacent the cable inlet 100. It should be recognized, however, that in alternative embodiments, the cable outlet 104 may be in one of the other walls of the base portion 42, and possibly a different wall from the cable inlet 100. The cable outlet 104 may include a strain-relief device to prevent excessive tensioning of the optical fibers of the outgoing fiber optic cable 102.

In one embodiment, the second group 94 of adapters 74 that defines the distribution field 96 may be configured as the remaining rows in the array of the plurality of adapters 74 provided by the main panel 80 of the adapter housing 72. For example, in an exemplary embodiment, the distribution field 96 may be defined by the rows below the topmost row of adapters 74 in the array of the plurality of adapters 74 in the main panel 80. It should be appreciated, however, that this location of the distribution field 96 is merely exemplary and that the distribution field 96 may be defined by a different group of the plurality of adapters 74. For example, in an alternative embodiment, the distribution field 96 may be defined by rows above the lowermost row of adapters 74 in the array of the plurality of adapters 74, or rows above and below a middle row of adapters 74 in the array of the plurality of adapters 74. In a further alternative embodiment, the distribution field 96 may be defined by columns of adapters 74 in the array of the plurality of adapters 74 that are not dedicated for the feeder field 92. Thus, aspects of the disclosure should not be limited to a particular group of the plurality of adapters 74 to define the distribution field 96.

The adapter housing 72 further includes a pair of brackets 106 extending from the front side 82 of the main panel 80 on opposed sides of the plurality of adapters 74 in the main panel 80. In one embodiment, the brackets 106 may include a first leg 108 extending from the front side 82 of the main panel 80 in a direction substantially perpendicular to the main panel 80 and a second leg 110 extending from the first leg 108 in a direction substantially perpendicular to the first leg 108 and away from the plurality of adapters 74 (e.g., providing an L shape). The second leg 110 is spaced from the front side 82 of the main panel 80 by the first leg 108 to provide sufficient space adjacent the front ports 76 of the plurality of adapters 74 in the main panel 80 for receiving fiber optic cables, as will be explained in more detail below, in an organized manner. In this regard, the adapter housing 72 may include one or more cable management tabs 112 attached to the brackets 106 for managing fiber optic cables being connected to, for example, the front ports 76 of the plurality of adapters 74 in the main panel 80. In one embodiment, for example, the cable management tabs 112 may be connected to the first leg 108 of the brackets 106 and provide support regions or surfaces for engaging and supporting fiber optic cables in an organized manner.

As noted above, in an exemplary embodiment, the adapter housing 72 may include a tri-panel configuration. The main panel 80 was described above and provides the plurality of adapters 74 for making the optical connections between the incoming fiber optic cable 98 and the outgoing fiber optic cable 102. To help protect the main panel 80 and the numerous fiber optic connections made in the front ports 76 of the plurality of adapters 74 that define the feeder field 92 and the distribution field 96, the adapter housing 72 may further include a front panel 114 connected to the main panel 80 at a hinge 116 and moveable between a closed position in which the front side 82 of the main panel 80 is inaccessible, and an opened position in which the front side 82 of the main panel 80 is accessible, such as by a technician. It should be recognized that the hinge 116 is merely exemplary and the front panel 114 may be connected to the main panel 80 by other mechanisms that allow relative movement between the main panel 80 and the front panel 114.

In an exemplary embodiment, the front panel 114 includes a top edge 118, a bottom edge 120, and a pair of side edges 122 extending between the top edge 118 and the bottom edge 120. The front panel 114 may also include flanges 124 extending from the side edges 122. In one embodiment, the flanges 124 may include hinge tabs 126 extending beyond the top edge 118 of the front panel 114 that are configured to be connected to the brackets 106 extending from the front side 82 main panel 80. In this regard, the brackets 106 may include a third leg 128 extending substantially perpendicular to the second leg 110 and away from the main panel 80. The flanges 124 of the front panel 114 may be positioned immediately outboard of the third legs 128 of the brackets 106 and coupled together by a pair of hinge pins 130 extending through the hinge tabs 126. In this arrangement, the front panel 114 may be configured to open in an upwardly direction, as illustrated by arrow C, to provide access to the main panel 80 of the adapter housing 72 and configured to close in a downwardly direction, as illustrated by arrow D, to close off access to the main panel 80 of the adapter housing 72. In an alternative embodiment (not shown), the hinge tabs 126 may extend beyond the bottom edge 120 of the front panel 114 such that the front panel 114 may be configured to open in a downwardly direction, as illustrated by arrow D, to provide access to the main panel 80 of the adapter housing 72 and configured to close in an upwardly direction, as illustrated by arrow C, to close off access to the main panel 80 of the adapter housing 72. In a further alternative embodiment (not shown), the front panel 114 may be hingedly attached to the main panel 80 at other locations, such as at one of the side edges 122.

In the closed position, the front panel 114 essentially overlies the main panel 80 and shields the front side 82 of the main panel 80, and more particularly the fiber optic connectors received within the front ports 76 of the plurality of adapters 74 in the main panel 80, from contact with other components in the terminal 34. For example, as explained above, oftentimes, the heap of fiber optic cables in conventional terminals may come into contact with the fiber optic connectors on the front side of the feeder field and/or the distribution field and interfere with the transmission between the incoming optical signals of the incoming fiber optic cable and the outgoing fiber optic signals of the outgoing fiber optic cable. Thus, the front panel 114 of the adapter housing 72 in the closed position essentially operates as a protective shield to the front side 82 of the main panel 80, where optical connections in the feeder field 92 and/or the distribution field 96 in the main panel 80 are made. Thus, the numerous optical fibers (e.g., from splitter modules 188 to the plurality of adapters 74 of the distribution field 96) will not interfere with the transmission between the incoming optical signals of the incoming fiber optic cable 98 and the outgoing optical signals of the outgoing fiber optic cable 102 at the terminal 34. In one embodiment, the front panel 114 may further include one or more latches 132 for securing the front panel 114 in the closed position. For example, in one embodiment, the latches 132 may include spring biased pins that are received through openings in the brackets 106 to releasably lock the front panel 114 to the main panel 80 in the closed position. It should be appreciated, however, that the latches 132 may take other forms, such as screws, clips or the like.

In the opened position, the front panel 114 may be moved out of the way of the main panel 80 (e.g., by rotating the front panel 114 upwardly) to expose the front ports 76 of the plurality of adapters 74 that define the feeder field 92 and the distribution field 96. Accordingly, a technician may easily make and/or break optical connections by inserting connectors into dedicated front ports 76 or removing connectors from dedicated front ports 76 according to, for example, a service call instruction or order. In one embodiment, the front panel 114 may be secured in the opened position by a locking mechanism. For example, in one embodiment, the hinge pins 130 may be configured to be tightened in a manner that prevents rotation of the front panel 114 relative to the main panel 80 when in a tightened state. Thus, when the front panel 114 is in the opened position, the front panel 114 cannot not fall down or otherwise undesirably move when the technician is accessing the front side 82 of the main panel 80. When it is desired to move the front panel 114 from the opened position to the closed position, the hinge pins 130 may be loosened such that the front panel 114 is once again rotatable about the hinge pins 130 when in a loosened state. Once the front panel 114 is in the closed position, the latches 132 may be reengaged to maintain the front panel 114 in the closed position.

When the front panel 114 is in the opened position, the rear side of the front panel 114 generally faces away from the base portion 42 of the terminal 34 so as to face, for example, the technician that is working at the terminal 34. In one embodiment, the rear side may include one or more labels 134. During installation and/or maintenance, technicians may use the one or more labels 134 for port identification of the front ports 76 associated with the feeder field 92 and/or the distribution field 96. In this way, when a technician gets an order that requires plugging one or more fiber optic connectors into certain front ports 76 of the distribution field 96, for example, those front ports 76 are readily identifiable to the technician. Thus, the front panel 114 has multiple purposes, including not only shielding the front ports 76 and associated fiber optic connectors associated with the plurality of adapters 74 that define the feeder field 92 and the distribution field 96 from contact with other components in the terminal 34, but also providing a convenient, easy-to-read label area that facilitates accurate optical connections made by technicians or other service personnel.

To help protect the main panel 80 and the numerous fiber optic connections made in the rear ports 78 of the plurality of adapters 74 that define the feeder field 92 and the distribution field 96, the adapter housing 72 may further include a rear panel 136 connected to the main panel 80 at a hinge 138 and moveable between a closed position in which the rear side 84 of the main panel 80 is inaccessible, and an opened position in which the rear side 84 of the main panel 80 is accessible, such as by a technician. It should be recognized that the hinge 138 is merely exemplary and the rear panel 136 may be connected to the main panel 80 by other mechanisms that allow relative movement between the main panel 80 and the rear panel 136.

In an exemplary embodiment, the rear panel 136 includes a top edge 140, a bottom edge 142, and a pair of side edges 144 extending between the top edge 140 and the bottom edge 142. The rear panel 136 may also include a flange 146 extending from the top edge 140 and toward the main panel 80. The flange 146 includes one or more latching tabs 148 configured to be connected to the main panel 80 of the adapter housing 72, such as with a fastener or the like. For example, the latching tabs 148 on the rear panel 136 may be configured to engage with the main panel 80 on a rear side 84 thereof and adjacent a top edge 150 of the main panel 80. In one embodiment, the main panel 80 may include a spacer plate 152 extending from the rear side 84 of the main panel 80 and adjacent a bottom edge 154 thereof. The spacer plate 152 is configured to provide sufficient room between the rear side 84 of the main panel 80 and the rear panel 136 (when in the closed position) for the optical fibers and fiber optic connectors that are routed to the rear ports 78 of the plurality of adapters 74 in the main panel 80. The rear panel 136 may be hingedly attached to an outer edge of the spacer plate 152. In this arrangement, the rear panel 136 may be configured to open in an upwardly direction, as illustrated by arrow E, to provide access to the rear side 84 of the main panel 80 of the adapter housing 72 and configured to close in a downwardly direction, as illustrated by arrow F, to close off access to the rear side 84 of the main panel 80 of the adapter housing 72. It should be appreciated that the rear panel 136 is intended to be opened only during the assembly of the terminal 34, as discussed below in more detail. Once the adapter housing 72 is connected to the base portion 42 of the terminal housing 40, the rear panel 136 is unable to move away from the closed position to the opened position. It should also be appreciated that in alternative embodiments, the rear panel 136 may be hingedly attached to the main panel 80 at other locations and open and close in other directions.

In the closed position, the rear panel 136 essentially overlies the rear side 84 of the main panel 80 and shields the rear side 84 of the main panel 80, and more particularly the fiber optic connectors received within the rear ports 78 of the plurality of adapters 74 in the main panel 80, from contact with other components in the terminal 34. For example, as explained above, oftentimes, the heap of fiber optic cables in conventional terminals may come into contact with the fiber optic connectors on the rear side of the feeder field 92 and/or the distribution field 96 and interfere with the transmission between the incoming optical signals of the incoming fiber optic cable 98 and the outgoing fiber optic signals of the outgoing fiber optic cable 102. Thus, the rear panel 136 of the adapter housing 72 in the closed position essentially operates as a protective shield to the rear side 84 of the main panel 80, where optical connections to the rear ports 78 of the adapters 74 in the feeder field 92 and/or the distribution field 96 in the main panel 80, are made. Thus, the numerous optical fibers associated with, for example, the incoming fiber optic cable 98 and the outgoing fiber optic cable 102 will not interfere with the transmission between the incoming optical signals of the incoming fiber optic cable 98 and the outgoing optical signals of the outgoing fiber optic cable 102 at the terminal 34.

In the opened position, the rear panel 136 may be moved out of the way of the rear side 84 of the main panel 80 to expose the rear ports 78 of the plurality of adapters 74 that define the feeder field 92 and the distribution field 96. Accordingly, a technician may easily make optical connections by inserting connectors into dedicated rear ports 78 of the plurality of adapters 74. When the fiber optic connections have been made in the rear ports 78 of the plurality adapters 74, the rear panel 136 may be moved from the opened position to the closed position. Fasteners, for example, may then be used to secure the rear panel 136 to the main panel 80 in the closed position. Fasteners may be used in this case because it should be unnecessary for the technician to gain access to the rear ports 78 of the plurality of adapters 74 that define the feeder field 92 and the distribution field 96 after the terminal 34 is assembled.

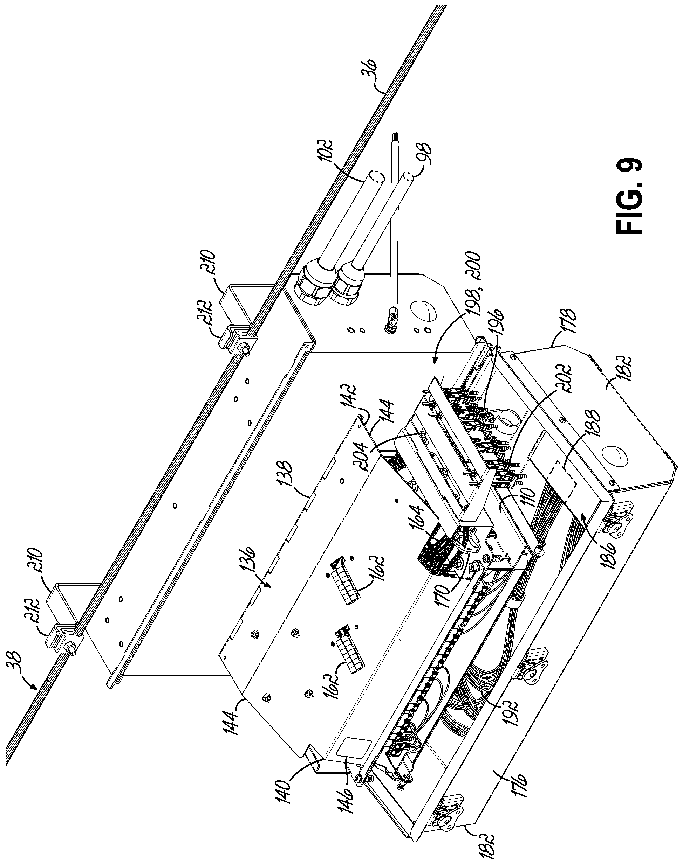

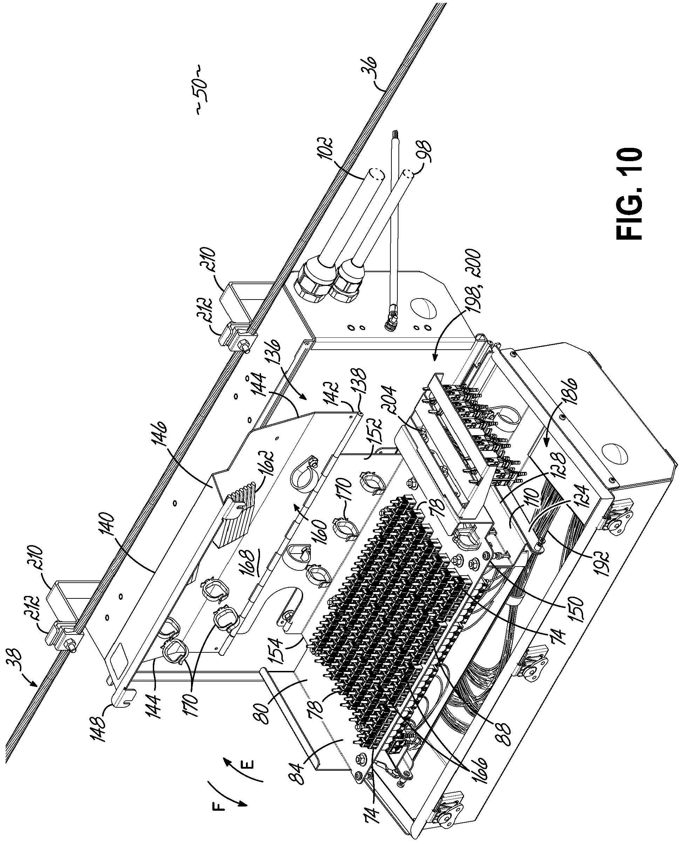

In one embodiment, the incoming fiber optic cable 98 may include a plurality of subunits, where each subunit includes at least one and preferably a plurality of incoming optical fibers. In a similar manner, the outgoing fiber optic cable 102 may likewise include a plurality of subunits, where each subunit includes at least one and preferably a plurality of outgoing optical fibers. To transition from individual optical fibers, for example, to subunits of the fiber optic cable or vice versa, the adapter housing 72 may include at least one fanout 160 having a fanout housing 162 for facilitating the transition. In an exemplary embodiment, the adapter housing 72 may include two fanouts 160 but the number may vary. The at least one fanout housing 162 includes a first side or end that receives the subunits of the incoming and/or outgoing fiber optic cables 98, 102. A second side or end of the fanout housing 162 includes a plurality of single fiber or multi-fiber cable pigtails 164 (Fig. 9) extending from the fanout housing 162. The optical fibers of the cable pigtails 164 are spliced to the optical fibers from the subunits of the incoming and/or outgoing fiber optic cables 98, 102 at a first end of the cable pigtails 164. A second end of the cable pigtails 164 includes fiber optic connectors 166, which are schematically shown in Fig. 10 (the remainder of the cable pigtails 164 are not shown to simplify the figure), for insertion into the rear ports 78 of the plurality of adapters 74 in the main panel 80 of the adapter housing 72. In one embodiment, the fiber optic connectors 166 may include SC type connectors. However, other types of fiber optic connectors 166 may be used with cable pigtails 164 and aspects of the disclosure should not be limited to a particular type of fiber optic connector 166.

In an exemplary embodiment, the fiber optic connectors 166 of the cable pigtails 164 associated with the incoming fiber optic cable 98 may be connected to respective rear ports 78 of the plurality of adapters 74 that define the feeder field 92 of the main panel 80 of the adapter housing 72. Additionally, the fiber optic connectors 166 of the cable pigtails 164 associated with the outgoing fiber optic cable 102 may be connected to respective rear ports 78 of the plurality of adapters 78 that define the distribution field 96 of the main panel 80 of the adapter housing 72. In one embodiment, the fanout housing 162 of the at least one fanout 160 may be attached to a front side 168 of the rear panel 136 of the adapter housing 72, such as with a screw rivet clip or the like. Moreover, the adapter housing 72 may further include a plurality of cable management devices to organize the optical fibers and cable pigtails 164 extending to and from the fanout housing 162 of the at least one fanout 160. In an exemplary embodiment, the plurality of cable management devices may include a plurality of fiber clips or holders 170. Such fiber holders 170 are known and will not be described in further detail. By way of example and without limitation, a plurality of fiber holders 170 may be attached to the front side 168 of the rear panel 136 and the rear side 84 of the main panel 80, e.g., on one side of the plurality of adapters 74. However, the number of fiber holders 170 and the location of the fiber holders 170 may vary depending on the management needs of the terminal 34.

Once the incoming fiber optic cable 98 and the outgoing fiber optic cable 102 are spliced to the cable pigtails 164 and the fiber optic connectors 166 of the cable pigtails 164 are connected to the appropriate rear ports 78 of the plurality of adapters 74 that define the feeder field 92 and the distribution field 96 of the adapter housing 72, the rear panel 136 may be moved to the closed position and the adapter housing 72 may be secured to the base portion 42 of the terminal housing 40 of the terminal 34. When so positioned, the front panel 114 of the adapter housing 72 remains capable of moving between its opened and closed positions, for reasons that will be described in more detail below.

As noted above, in one aspect of the present disclosure, some of the various fiber optic components of the terminal 34 may be positioned in the cover portion 44 of the terminal housing 40. Turning to Figs. 5-8, the cover portion 44 includes a generally rectangular body 174 having a top wall 176, a bottom wall 178 opposite the top wall 176, a front wall 180 extending between the top wall 176 and the bottom wall 178, and a pair of side walls 182 also extending between the top wall 176 and the bottom wall 178. The cover portion 44 lacks a wall at its rear side, as that side of the cover portion 44 is configured to be closed off by the base portion 42 of the terminal housing 40. Similar to the above, it should be understood that the terms "top, "bottom", "rear", "front", and "side" are used to facilitate a description of embodiments of the disclosure and are not intended to limit the terminal 34 to a particular arrangement or orientation. As illustrated in the figures, the top wall 176 of the cover portion 44 is configured to cooperate with the latches 52 on the base portion 42 to maintain the cover portion 44 in the closed position. Moreover, the inner edge 184 of the bottom wall 178 of the cover portion 44 may be configured to be connected to the base portion 42 via the hinge 48. Accordingly, and as noted above, the cover portion 44 is configured to open in a downwardly direction, as illustrated by arrow A, to provide access to the interior 46 of the terminal housing 40, and configured to close in an upwardly direction, as illustrated by arrow B, to close off access to the interior 46 of the terminal housing 40. The terminal housing 40 may include a limit mechanism to limit the angle through which the cover portion 44 may rotate relative to the base portion 42. In one embodiment, for example, the rotation limit mechanism may include one or more lanyards 172 to limit the angle of the rotation between the cover portion 44 and the base portion 42 of the terminal housing 40.

In an exemplary embodiment, the cover portion 44 of the terminal housing 40 includes a splitter housing 186 that may be fixedly attached to the cover portion 44, such as at one or more of the walls 176, 178, 180, 182 thereof. For example, in one embodiment, the splitter housing 186 may be fixed to the cover portion 44 with one or more fasteners, such as screws, bolts, rivets, clips, etc. The splitter housing 186 includes at least one splitter module 188 generally disposed in and connected to the splitter housing 186. In an exemplary embodiment, however, a plurality of splitter modules 188 may be held by the splitter housing 186. Each of the splitter modules 188 includes a module housing 190 having an internal optical splitter (not shown) so that a multiplexed optical signal carried by, for example, the input fiber optic cable 98 may be separated into multiple demultiplexed optical signals carried by, for example, the output fiber optic cable 102. Optical splitters are generally well known in the industry and thus will not be further described herein. Each splitter module 188 may include a plurality of module pigtails 192 extending from an end of the splitter module 188. At least one of the plurality of module pigtails 192 may be an incoming/input module pigtail 194 and carries the multiplexed optical signal from the incoming fiber optic cable 98, for example. The remaining plurality of module pigtails 192 may be outgoing/output module pigtails 192 and carry the demultiplexed optical signal resulting from splitting the incoming optical signal with the optical splitter to the outgoing fiber optic cable 102.

The ends of the module pigtails 192 opposite to the splitter module 188 may include fiber optic connectors 196 for insertion into the front ports 76 of the plurality of adapters 74 in the main panel 80 of the adapter housing 72. In one embodiment, the fiber optic connectors 196 may include SC-type connectors. However, other types of fiber optic connectors 196 may be used with module pigtails 192 and aspects of the disclosure should not be limited to a particular type of fiber optic connector 196. In an exemplary embodiment, the fiber optic connectors 196 of the module pigtails 192 associated with the multiplexed incoming optical signal (i.e., the at least one input module pigtail 194) may be connected to respective front ports 76 of the plurality of adapters 78 that define the feeder field 92 of the main panel 80 of the adapter housing 72. Additionally, the fiber optic connectors 196 of the module pigtails 192 associated with the de-multiplexed outgoing fiber optic signal (i.e., the output module pigtails) may be connected to respective front ports 76 of the plurality of adapters 78 that define the distribution field 96 of the main panel 80 of the adapter housing 72.

In one embodiment, the splitter housing 186 may be attached to a rear side of the front wall 180 of the cover portion 44 adjacent to, for example, one of the side walls 182 of the cover portion 44 of the terminal housing 40. For example, the splitter housing 186 may be positioned adjacent to the side wall 182 of the cover portion 44 furthest from the adapter housing 72 in the base portion 42 of the terminal housing 40. Moreover, the cover portion 44 may further include a plurality of cable management devices to organize the module pigtails 192 to and from the at least one splitter module 188 in the splitter housing 186. In an exemplary embodiment, the plurality of cable management devices may include a plurality of fiber holders 170. By way of example, and without limitation, a plurality of cable holders 170 may be connected to the front wall 180 of the cover portion 44 of the terminal housing 40. Additional cable holders 170 may be connected to the bottom wall 178 of the cover portion 44 of the terminal housing 40 adjacent to, for example, the hinge 48. It should be appreciated, however, that the number of fiber holders 170 and the location of the fiber holders 170 may vary depending on the management needs of the terminal 34.

In one embodiment, not all of the module pigtails 192 from the at least one splitter module 188 in the splitter housing 186 need to be connected to a front port 76 of a respective one of the plurality of adapters 74 in the distribution field 96 of the adapter housing 72, thereby making ports at the other end of the outgoing fiber optic cable 102 (such as homes, apartments, offices, etc.) live. Instead, the module pigtails 192 associated with the front ports 76 in the distribution field 96 that correspond to outgoing optical fibers associated with entities (e.g., people, businesses, etc.) that have not requested service may be diverted away from the distribution field 96 in the adapter housing 72 to a parking device 198 configured to temporarily hold or store the fiber optic connectors 196 of those unused module pigtails 192 until service for those entities is requested.

In this regard, and in one embodiment, the adapter housing 72 in the base portion 42 of the terminal housing 40 may include a parking housing 200 extending from a side of the adapter housing 72. The parking housing 200 may be connected to the adapter housing 72 with fasteners, such as screws, bolts, rivets, clips or the like. The parking housing 200 includes a plurality of parking ports 202 configured to receive a fiber optic connector 196 associated with those unused module pigtails 192. In one embodiment, the parking housing 200 may include at least one parking slot 204 for receiving a connector holder 206 that defines the plurality of parking ports 202. In an exemplary embodiment, the parking housing 200 includes a plurality of parking slots 204 for receiving a respective connector holder 206. In this way, additional connector holders 206 may be selectively connected to parking slots 204 as the fiber network expands and more outgoing fiber optic cables 102 are connected to the terminal 34. During a service call, a technician may move fiber optic connectors 196 (and corresponding module pigtails 192) from the parking ports 202 of the parking housing 200 to the front ports 76 in the distribution field 96 in the adapter housing 72 to provide service to, for example, a new subscriber. Similarly, the technician may move fiber optic connectors 196 (and corresponding module pigtails 192) from the front ports 76 in the distribution field 96 in the adapter housing 72 to the parking ports 202 of the parking housing 200 to cutoff service to, for example, a current subscriber.

With the terminal 34 described above, a description of the routing of the optical fibers associated with the terminal 34 and the configuration of the terminal 34 to optically connect the incoming fiber optic cable 98 and the outgoing fiber optic cable 102 will now be provided for clarity. As an initial matter, the terminal 34 may be provided with the adapter housing 72 and the splitter housing 186. The adapter housing 72 is not pre-connected to the base portion 42 of the terminal housing 40, but the splitter housing 186 may be pre-connected to the cover portion 44 of the terminal housing 40, such as at the manufacturing facility of the terminal 34. Moreover, the plurality of adapters 74 may be pre-installed within the openings 86 in the main panel 80 of the adapter housing 72, such as at the manufacturing facility of the terminal 34. The at least one splitter module 188 may also be pre-installed in the splitter housing 186 and the module pigtails 192 coiled up in an organized manner. Alternatively, the at least one splitter module 188 may also be installed in the splitter housing 186 at the terminal installation site.

A technician at the terminal installation site will, using a bucket truck or other type of lift, attach the terminal 34 to the strand 36 of the pole-based network 38. In this regard, the terminal 34 may include at least one mounting bracket 210 connected to the base portion 42 of the terminal housing 40, such as at the rear wall 64 thereof. The terminal end of the at least one mounting bracket 210 that include a clamp device 212 for connecting the at least one bracket 210, and thus the terminal 34, to the strand 36. With the adapter housing 72 detached from the terminal 34 and the terminal 34 in the opened position, the end sections of the incoming fiber optic cable 98 and the outgoing fiber optic cable 102 may be inserted into the terminal housing 40 via the cable inlet 100 and the cable outlet 104, respectively. The cable jackets, sheaths, etc. of the respective end sections may be stripped to expose the incoming and outgoing optical fibers associated with the incoming fiber optic cable 98 and the outgoing fiber optic cable 102, respectively. In a next step, the plurality of cable pigtails 164 may be provided and is spliced to the incoming and outgoing optical fibers at the at least one fanout housing 162. Field splicing of optical fibers is well known, and a further description will not be provided herein. The at least one fanout housing 160 may then be connected to the front side of the rear panel 136 of the adapter housing 72.

In a next step, the plurality of cable pigtails 164 may be routed through the plurality of cable management devices 170 on the adapter housing 72 such that the fiber optic connectors 166 associated with the cable pigtails 164 are adjacent the rear ports 78 of the plurality of adapters 74 on the main panel 80 of the adapter housing 72. Next, the fiber optic connectors 166 of the cable pigtails 164 associated with the incoming optical fibers of the incoming fiber optic cable 98 may be routed to the first group 90 of the plurality of adapters 74 that define the feeder field 92 and inserted into a respective one of the rear ports 78 of those plurality of adapters 74. In a similar manner, the fiber optic connectors 166 of the cable pigtails 164 connected to the outgoing optical fibers of the outgoing fiber optic cable 98 may be routed to the second group 94 of the plurality of adapters 74 that defines the distribution field 96 and inserted into a respective one of the rear ports 78 of those plurality of adapters 74. The rear panel 136 of the adapter housing 72 may then be moved to the closed position and secured to the main panel 80 of the adapter housing 72. At this point, the adapter housing 72 may be positioned in the base portion 42 of the terminal housing 40 and secured thereto using, for example, fasteners. In this regard, unless more incoming and/or outgoing fiber optic cables 98, 102, are being added to the terminal 34, it should be unnecessary to access the rear side of the adapter housing 72.

Turning now to the splitter side of the terminal 34, the front panel 114 of the adapter housing 72 may be moved from the closed position to the opened position to expose the front ports 76 of the plurality of adapters 74 in the main panel 80 of the adapter housing 72. In a next step, the module pigtails 192 extending from the at least one splitter module 188 in the splitter housing 186 may be uncoiled and routed through the plurality of cable management devices 170 on the terminal housing 40 (e.g., the cover portion 44 thereof) such that the fiber optic connectors 196 associated with the module pigtails 192 are generally adjacent the front ports 76 of the plurality of adapters 74 on the main panel 80 of the adapter housing 72. In a next step, the fiber optic connector 196 of the at least one input module pigtail 194 may be routed to the first group 90 of the plurality of adapters 74 that define the feeder field 92 and inserted into a respective one of the front ports 76 of those plurality of adapters 74. Furthermore, and regarding the remaining module pigtails 192, at least some of the fiber optic connectors 196 of the remaining module pigtails 192 may be routed to the second group 94 of the plurality of adapters 74 that define the distribution field 96 and inserted into a respective one of the front ports 76 of those plurality of adapters 74. For the module pigtails 192 that are unused for providing an optical signal to subscriber premises, those fiber optic connectors 196 may be routed to the parking device 198 and inserted into a respective one of the plurality of parking ports 202 associated with the parking device 198.

At this point, for example, the front panel 114 of the adapter housing 72 may be moved from the opened position to the closed position and secured to the main panel 80 of the adapter housing 72. The cover portion 44 of the terminal housing 40 may then be moved from the opened position to the closed position. Because the module pigtails 192 are organized using the fiber management devices and due to the front panel 114 shielding the front ports 76 of the plurality of adapters 74, as well as the fiber optic connectors 196 received therein, disruptions in the transmission of the optical signals from the incoming fiber optic cable 98 to the outgoing fiber optic cable 102 due to overcrowding in the terminal 34 may be avoided.

At least some of the above-mentioned installation steps may be performed prior to the terminal 34 being at the terminal installation site. For example, although the routing of the fiber optic connectors 196 of the module pigtails 192 to the front ports 76 of the adapters 74 or to the parking ports 202 is described above after attaching the terminal 34 to the strand 36 and after establishing connections to the rear ports 78 of the adapters 74 on the main panel 80 of the adapter housing 72, such steps may be performed at another location before the terminal 34 arrives at the terminal installation site. Such steps may even be performed by the manufacturer of the terminal 34 such that the owner of the network 38 need not have technicians perform these steps in the field.

Regardless of where or when installation steps are performed, once the installation is complete and the terminal 34 is being used in the network 38, the operator of the network 28 may have reasons to access the terminal 34. In the event of a service call that requires a technician to access the installed terminal 34, the technician may, using a bucket truck or other lift, move the cover portion 44 of the terminal housing 40 from the closed position to the opened position to access the interior 46 of the terminal housing 40. Next, the plurality of adapters 74 may be accessed by moving the front panel 114 from the closed position to the opened position and secured in the opened position. The technician may then perform service on the terminal 34. For example, the technician may move one or more fiber optic connectors 196 from the front ports 76 of the plurality of adapters 74 to the parking ports 202 on the parking device 198, or vice versa. In another process, additional splitter modules 188 may be inserted into the splitter housing 186 and the module pigtails 192 associated with the added splitter module 188 may be routed through the fiber management devices 170 and the fiber optic connectors 196 thereof may be inserted into the front ports 76 of the plurality of adapters 74 in the manner described above.

Furthermore, should maintenance have to be performed on the terminal 34, such as cleaning a connector and or port for debris, changing out a malfunctioning slitter module 188, etc., the technician may perform those maintenance services in an easier manner. For example, because some of the fiber optic components are positioned in the base portion of the terminal housing 40 and some of the fiber optic components are positioned in the cover portion 44 of the terminal housing 40, when the terminal housing 40 is placed in the opened position, there is more space for the technicians to work and managing the optical fibers in the terminal 34 becomes easier.

While the present disclosure has been illustrated by the description of specific embodiments thereof, and while the embodiments have been described in considerable detail, it is not intended to restrict or in any way limit the scope of the appended claims to such detail. The various features discussed herein may be used alone or in any combination within and between the various embodiments. Additional advantages and modifications will readily appear to those skilled in the art. The disclosure in its broader aspects is therefore not limited to the specific details, representative apparatus and methods and illustrative examples shown and described. Accordingly, departures may be made from such details without departing from the scope of the disclosure.

## Claims

1. A strand mounted terminal for a fiber optic network that includes an incoming fiber optic cable carrying incoming optical fibers and an outgoing fiber optic cable carrying outgoing optical fibers, the terminal comprising:
a terminal housing configured to receive respective end sections of the incoming fiber optic cable and the outgoing fiber optic cable and defining an interior for receiving fiber optic components therein, the terminal housing comprising:
a base portion defining part of the interior of the terminal housing and including some of the fiber optic components therein, the base portion configured to be connected to the strand; and
a cover portion defining part of the interior of the terminal housing and including some of the fiber optic components therein, the cover portion configured to be connected to the base portion and moveable between an opened position in which the interior of the terminal housing is accessible, and a closed position in which the interior of the terminal housing is inaccessible.

2. The strand mounted terminal of claim 1, wherein the terminal housing includes a limit mechanism to restrict movement of the cover portion of the terminal housing relative to the base portion of the terminal housing in the opened position.

3. The strand mounted terminal of either claim 1 or claim 2, wherein the fiber optic components contained in the terminal comprise:
an adapter housing including a plurality of adapters, each of the plurality of adapters defining at least one front port and at least one rear port; and
a splitter housing including at least one splitter module,
wherein the adapter housing is connected to and substantially contained in the base portion of the terminal housing, and
wherein the splitter housing is connected to and substantially contained in the cover portion of the terminal housing.

4. The strand mounted terminal of claim 3, wherein the adapter housing comprises:
a main panel having a front side and a rear side, the main panel carrying the plurality of adapters such that the front ports of the plurality of adapters are accessible from the front side of the main panel and the rear ports of the plurality of adapters are accessible from the rear side of the main panel; and
a front panel connected to the main panel and moveable between an opened position in which the front side of the main panel including the front ports of the plurality of adapters is accessible, and a closed position in which the front side of the main panel including the front ports of the plurality of adapters is inaccessible.

5. The strand mounted terminal of claim 4, wherein one of the front panel or the main panel of the adapter housing includes at least one latch for releasably securing the front panel in the closed position; and wherein one of the front panel or the main panel includes a locking mechanism for releasably securing the front panel in the opened position.

6. The strand mounted terminal of either claim 4 or claim 5, wherein a rear side of the front panel includes a label configured to provide indicia of port identification.

7. The strand mounted terminal of any of claims 4-6, further comprising:
a rear panel connected to the main panel and moveable between an opened position in which the rear side of the main panel including the rear ports of the plurality of adapters is accessible, and a closed position in which the rear side of the main panel including the rear ports of the plurality of adapters is inaccessible.

8. The strand mounted terminal of claim 7, wherein one of the rear panel or the main panel of the adapter housing includes a locking mechanism for releasably securing the rear panel in the closed position.

9. The strand mounted terminal of any of claims 3-8, further comprising:
at least one fanout housing attached to the adapter housing and operatively connected to the incoming fiber optic cable and the outgoing fiber optic cable; and
a plurality of cable pigtails extending from the fanout housing, each of the plurality of pigtails being spliced to at least one of the incoming optical fibers of the incoming fiber optic cable or to at least one of the outgoing optical fibers of the outgoing fiber optic cable,
wherein an end section of each of the plurality of cable pigtails includes a fiber optic connector, and
wherein the fiber optic connectors are received in a rear port of a respective one of the plurality of adapters in the adapter housing.

10. The strand mounted terminal of claim 9, wherein:
the plurality of cable pigtails includes a first group operatively connected to the incoming fiber optic cable,
wherein a first group of the plurality of adapters in the adapter housing defines a feeder field, and
wherein the fiber optic connector of the first group of the plurality of cable pigtails is received in a rear port of a respective one of the plurality of adapters that defines the feeder field.

11. The strand mounted terminal of either claim 9 or claim 10, wherein:
the plurality of cable pigtails includes a second group operatively connected to the outgoing fiber optic cable,
wherein a second group of the plurality of adapters in the adapter housing defines a distribution field, and
wherein the fiber optic connector of the second group of the plurality of cable pigtails is received in a rear port of a respective one of the plurality of adapters that defines the distribution field.

12. The strand mounted terminal of any of claims 3-11, wherein the at least one splitter module includes a plurality of module pigtails extending from the at least one splitter module, wherein an end section of each of the module pigtails includes a fiber optic connector, and wherein the fiber optic connectors are received in a front port of a respective one of the plurality of adapters in the adapter housing.

13. The strand mounted terminal of claim 12, wherein:
a first group of the plurality of adapters in the adapter housing defines a feeder field configured to be operatively connected to the incoming fiber optic cable, and
wherein the fiber optic connector of at least one of the plurality of module pigtails is received in the front port of a respective one of the first group of plurality of adapters that defines the feeder field.

14. The strand mounted terminal of either claim 12 or claim 13, wherein:
a second group of the plurality of adapters in the adapter housing defines a distribution field configured to be operatively connected to the outgoing fiber optic cable, and
wherein the fiber optic connector of some of the plurality of module pigtails is received in the front port of a respective one of the second group of plurality of adapters that define the distribution field.

15. The strand mounted terminal of any of claims 12-14, wherein the terminal includes a parking device having a plurality of parking ports, and wherein each of the plurality of parking ports is configured to receive the fiber optic connector of the plurality of module pigtails.

16. The strand mounted terminal of any of the preceding claims, wherein each of the base portion of the terminal housing and the cover portion of the terminal housing includes one or more fiber management devices.
